# EUROPEAN PATENT APPLICATION

(11) **EP 0 701 920 A1**
(43) Date of publication of application: **20.03.1996**
(21) Application number: 95306223.9
(22) Date of filing: 06.09.1995
(51) Int. Cl.: B60N 2/24, B60N 2/44

(54) **Passenger seat**

(30) Priority: 16.09.1994 GB 9418645
(71) Applicant: L.A. RUMBOLD LIMITED, Warwick CV34 6DE (GB)
(72) Inventor: Matsumiya, James Akira, Gerrards Cross, Buckinghamshire SL9 7PF (GB)
(74) Representative: Hollinghurst, Antony

(57) **Abstract**

A vehicle seat has a seat pan (18) and a seat back (16) which is reclinable from a normal substantially vertical position. The seat pan (18) comprises a main portion (22) and an auxiliary portion (28) having first and second non-parallel surfaces. The main portion (22) has a recess (26 of complementary shape to the auxiliary portion (28) which is positionable either in the recess (26) with its first surface abutting a surface of the recess (26) so that the second surface is substantially coplanar with an adjacent surface of the main portion (22), or with said second surface abutting said adjacent surface of the main portion (22) so that said first surface is substantially coplanar with said surface of the recess (26). The seat back (16) is of similar construction.

## Description

This invention relates to a vehicle seat of the type having a first support member comprising a seat pan and a second support member comprising a seat back which is reclinable from a normal substantially vertical position. The invention is particularly, but not exclusively applicable to a seat of the type which also has a footrest which can be raised. Such seats are commonly known as sleeper seats and are used extensively as aircraft passenger seats.

Many airlines use a pitch between successive rows of sleeper seats of about 62 inches (1575 mm). Consequently, it is not feasible to lower the seat back and raise the footrest of a sleeper seat sufficiently to form a continuous horizontal surface with the seat pan. With known sleeper seats, the maximum extent to which the seat back can be tilted is substantially above the horizontal. Similarly, the maximum extent to which the footrest can be raised is substantially below the horizontal. In this position, the seat back, seat pan and footrest form a zigzag surface which is fairly comfortable for people who sleep on their backs but is less comfortable for people who prefer to sleep on their sides.

EP-A-0 639 479 discloses a vehicle seat of the type described above, in which both the seat pan and the seat back are pivotally mounted for movement between respective normal positions and respective tilted positions in which they provide a substantially planar support surface for a sleeping passenger. The present invention aims to achieve a similar result in a simpler manner.

According to the invention, in a vehicle seat of the type described above, at least one of the support members comprises a main portion and an auxiliary portion having first and second non-parallel surfaces, the main portion having a recess of complementary shape to the auxiliary portion which is positionable either in said recess with said first surface abutting a surface of the recess so that said second surface is substantially coplanar with an adjacent surface of the main portion, or with said second surface abutting said adjacent surface of the main portion so that said first surface is substantially coplanar with said surface of the recess.

Preferably, a hinge connects the auxiliary portion to the main portion at the boundary between the recess and said adjacent surface. The hinge may comprise fabric and may be integral with a fabric cover for said main portion and/or said auxiliary portion.

In one form of the invention both the seat pan and the seat back have main and auxiliary portions in accordance with the invention. In another form of the invention, only one of the seat pan and the seat back are in accordance with the invention and the other takes one of the forms described in above-mentioned EP-A-0 639 479.

An embodiment of the invention will now be described, by way of example, with reference to the accompanying drawings, in which:
Figure 1 is perspective view of a sleeper seat, in accordance with the invention, with its footrest stowed and its seat back upright;
Figure 2 is perspective view of a sleeper seat, in accordance with the invention, with its footrest deployed and its seat back inclined;
Figure 3 is a longitudinal cross-sectional view of the embodiment shown in Figure 1, with the footrest omitted; and
Figures 4 and 5 are views similar to Figures 2 and 3, with the seat in the sleeping position.

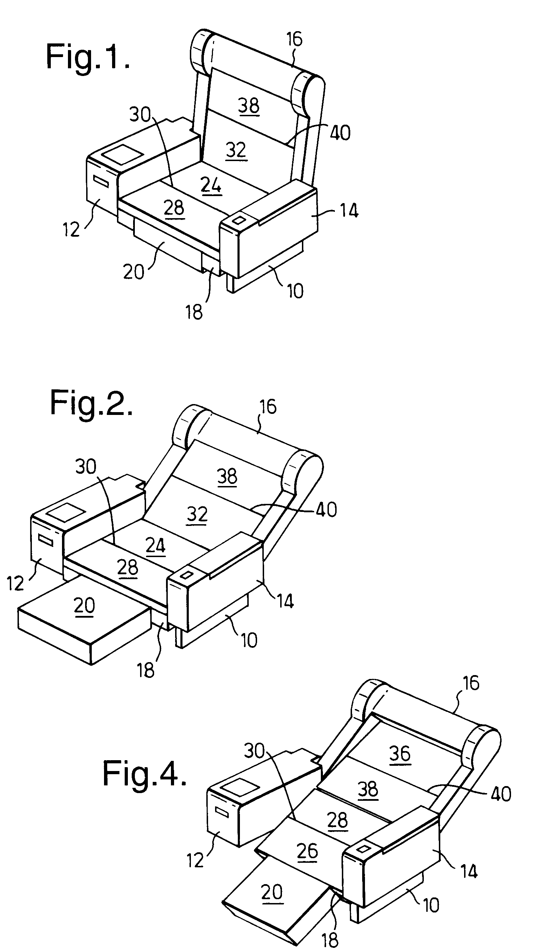

Figures 1 and 2 show a sleeper seat in accordance with the invention. The seat comprises a base frame 10, whereby it may be secured in place in an aircraft. Armrests 12 and 14 are rigidly secured to the frame 10. A seat back 16 is pivotally secured to the frame 10 for angular movement about a horizontal transverse axis (not shown) near its bottom edge between an upright position (Figure 1) and a reclined position (Figure 2). A seat pan 18 is also mounted on the frame 10 and has, secured to its front edge, a legrest 20 which is movable between a stowed position (not shown) and a deployed position, as shown in Figure 1. As described so far, the seat shown in Figure 1 is similar to known sleeper seats.

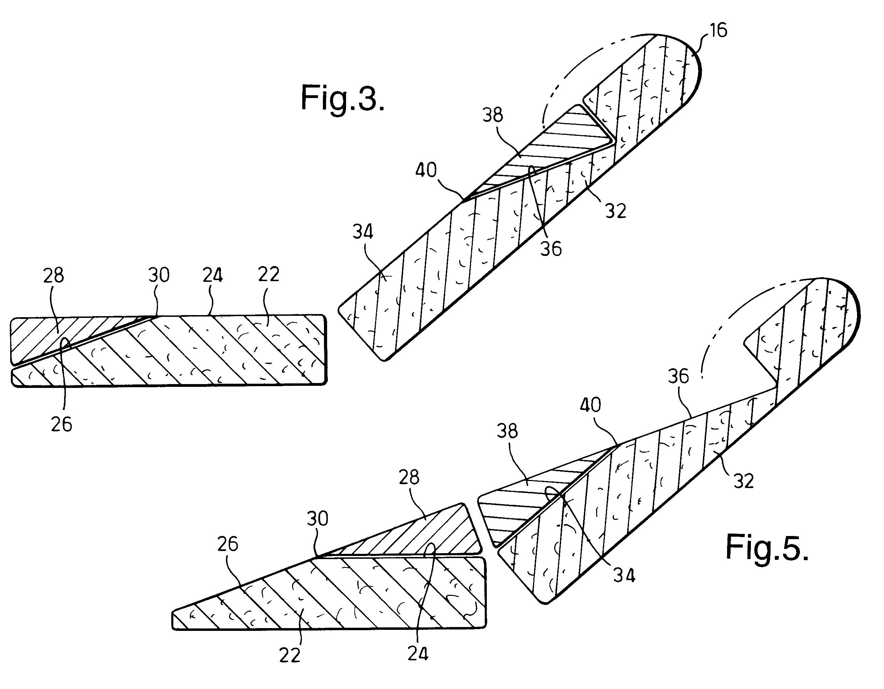

As shown in Figure 3, the seat pan 18 includes a main seat cushion 22. The top surface of rear part 24 of the main seat cushion 22 is generally horizontal while that of the front part 26 slopes downwardly. An auxiliary seat cushion 28, of triangular cross-section is positioned on top of the front downwardly sloping part 26 of the main seat cushion 22 so that its top surface is substantially coplanar with the rear part 24 of the main seat cushion 22. The rear edge of the auxiliary seat cushion 28 is connected to the junction between the rear part 24 and the front part 26 of the main seat cushion 22 by a fabric hinge 30.

Similarly, the backrest 16 includes a main back cushion 32. The front surface of lower part 34 of the main back cushion 32 is generally parallel to the while the upper part 36 slopes downwardly. An auxiliary back cushion 38, of triangular cross-section is positioned on top of the upper downwardly sloping part 36 of the main back cushion 32 so that its top surface is substantially coplanar with the lower part 34 of the main back cushion 32. The lower edge of the auxiliary back cushion 38 is connected to the junction between the lower part 34 and the upper part 36 of the main back cushion 32 by a fabric hinge 40.

Figures 4 and 5 show the seat of Figures 1 to 3 in a position in which the upper surfaces of the seat back 16, the seat pan 18 and the legrest 20 all lie in the same inclined plane so as to provide a substantially planar support surface for a sleeping passenger. The auxiliary seat cushion 28 is folded rearwardly about its hinge 30 so as to lie on top of the top surface of rear part 24 of the main seat cushion 22. Similarly the auxiliary back cushion 38 is folded rearwardly about its hinge 40 so as to lie on top of the top surface of lower part 34 of the main back cushion 32. The front end of the footrest 20 is lowered to the position shown in Figure 4. The footrest 20 is mounted on the seat using a conventional mechanism which is not described in detail.

Each of the fabric hinges 30 and 40 may comprise part of a single integrated fabric cover for the corresponding main and auxiliary cushions 22, 28 and 32, 38. Alternatively the main and auxiliary cushions may have separate covers, each of which has a flap arranged to be secured to the flap of the other cushion by a touch-and-close fastener such as "Velcro".

As a further alternative, the main and auxiliary cushions may be moulded as a single unit from synthetic rubber, with an integrally moulded hinge interconnecting them.

## Claims

1. A vehicle seat having a first support member comprising a seat pan (18) and a second support member comprising a seat back (16) which is reclinable from a normal substantially vertical position, characterised in that at least one of the support members (16, 18) comprises a main portion (22, 32) and an auxiliary portion (28, 38) having first and second non-parallel surfaces, the main portion (22, 32) having a recess (26, 36) of complementary shape to the auxiliary portion (28, 38) which is positionable either in said recess (26, 36) with said first surface abutting a surface of the recess (26, 36) so that said second surface is substantially coplanar with an adjacent surface of the main portion (22, 32), or with said second surface abutting said adjacent surface of the main portion (22, 32) so that said first surface is substantially coplanar with said surface of the recess (26, 36).

2. A vehicle seat according to claim 1, wherein the auxiliary portion (28, 38) is of triangular cross-section.

3. A vehicle seat according to claim 1 or 2, wherein a hinge (30, 40) connects the auxiliary portion (28, 38) to the main portion (22, 32) at the boundary between the recess (26, 36) and said adjacent surface.

4. A vehicle seat according to claim 3, wherein the hinge (30, 40) comprises fabric.

5. A vehicle seat according to claim 4, wherein the hinge (30, 40) is integral with a fabric cover for said main portion (22, 32).

6. A vehicle seat according to claim 4, wherein the hinge (30, 40) is integral with a fabric cover for said auxiliary portion (28, 38).
